# EUROPEAN PATENT SPECIFICATION

(11) **EP 4 386 362 B1**
(45) Date of publication and mention of the grant of the patent: **15.07.2026**
(21) Application number: 22941201.0
(22) Date of filing: 13.05.2022
(51) Int. Cl.: G01N 21/88, H01M 10/0587, H01M 10/42, G01B 11/02, G01B 11/04, G01B 21/06

(54) **DETECTION METHOD AND DETECTION APPARATUS FOR ELECTRODE PLATE AND STACKING SYSTEM**
DETEKTIONSVERFAHREN UND DETEKTIONSVORRICHTUNG FÜR ELEKTRODENPLATTE UND STAPELSYSTEM
PROCÉDÉ ET APPAREIL DE DÉTECTION POUR PLAQUE D'ÉLECTRODE ET SYSTÈME D'EMPILEMENT

(43) Date of publication of application: 19.06.2024
(73) Proprietor: Contemporary Amperex Technology (Hong Kong) Limited, Central, Central And Western District (HK)
(72) Inventor: HU, Jun, Ningde, Fujian 352100 (CN); FENG, Shiping, Ningde, Fujian 352100 (CN); NI, Dajun, Ningde, Fujian 352100 (CN); CHEN, Canbin, Ningde, Fujian 352100 (CN); ZHENG, Qiuhui, Ningde, Fujian 352100 (CN); CHANG, Wen, Ningde, Fujian 352100 (CN); DUAN, Pengfei, Ningde, Fujian 352100 (CN); WU, Qing, NINGDE, Fujian 352100 (CN); LU, Haoran, NINGDE, Fujian 352100 (CN); LEI, Yang, NINGDE, Fujian 352100 (CN); ZHAO, Baiquan, NINGDE, Fujian 352100 (CN)
(74) Representative: Gong, Jinping
(86) International application number: PCT/CN2022/092799
(87) International publication number: WO 2023/216249

(56) References cited:
- CN-A- 108 548 491
- CN-A- 111 392 403
- CN-A- 112 635 848
- CN-A- 113 607 742
- CN-A- 113 607 742
- CN-A- 113 720 282
- CN-A- 113 820 333
- CN-U- 212 931 393
- CN-U- 215 066 248
- KR-A- 20220 033 865

## Description

### TECHNICAL FIELD

This application relates to the field of battery technologies, and in particular, to a detection method for electrode plate, a detection apparatus for electrode plate, a stacking system, a detection device, and a computer-readable storage medium.

### BACKGROUND

With the rapid development of clean energy, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

A battery cell in a traction battery is a component that undergoes electrochemical reactions and is mainly formed by consecutive electrode plates through winding or stacking. Typically, the electrode plate is made of extremely thin metal foil and has low strength, making it prone to folding during a battery production process. Folding of the electrode plate leads to low capacity, short circuits, and even thermal runaway and fires of the battery cell.

Therefore, it is necessary to detect the production quality of the electrode plate. In some cases, the electrode plate is detected manually. However, this method has high labor intensity, low detection precision, missed detection, and false detection.
CN212931393U describes a wrinkle detection device for a battery tab, which is used for detecting the wrinkle of the battery tab, comprising a bracket, two groups of movable displacement sensors arranged above the battery tab.

### SUMMARY

This application is intended to solve at least one of the technical problems in the prior art. In view of this, this application provides a detection method for electrode plate as defined in claims 1 to 8, a detection apparatus for electrode plate as defined in claims 9 to 12, a detection device for electrode plate as defined in claim 13, and a computer-readable storage medium as defined in claim 14, so as to improve precision and accuracy of detection for electrode plate.

According to a first aspect, an embodiment of this application provides a detection method for electrode plate. The electrode plate includes a coated portion and an uncoated portion located on at least one side of the coated portion in a longitudinal direction. The detection method includes, inter alia:
step S1000: obtaining dimensional parameters D₁ ... D_{N} at different detection positions P₁ ... P_{N} of the uncoated portion in a transverse direction perpendicular to the longitudinal direction; and step S2000: comparing the dimensional parameters D₁ ... D_{N} with a dimensional detection standard S to determine whether the uncoated portion is folded, where N is a positive integer, and N is greater than or equal to 2.

In the technical solution of this embodiment of this application, the dimensional parameters at multiple positions of the electrode plate are compared with the dimensional detection standard to determine whether the electrode plate is folded, which can implement accurate detection for the electrode plate.

In some embodiments, the dimensional parameters are dimensional parameters of the uncoated portion in the longitudinal direction. Measuring the dimensional parameters of the electrode plate in the longitudinal direction and determining whether the dimensional parameters are within a preset range can accurately detect folding of the electrode plate.

In some embodiments, step S1000 includes: step S1100: driving the electrode plate to move along the transverse direction; and step S 1200: obtaining, during movement of the electrode plate along the transverse direction, the dimensional parameters D₁ ... D_{N} at the different detection positions P₁ ... P_{N} of the uncoated portion of the electrode plate. Detection is performed during movement of the electrode plate, that is, online detection during production can process electrode plates which do not meet production requirements in a timely manner to prevent such electrode plates from entering subsequent production procedures, which improves the yield of products and avoids waste of production materials.

In some embodiments, before step S2000, the detection method further includes: step S3000: obtaining a dimensional detection standard S of the uncoated portion of the electrode plate. Uncoated portions of electrode plates may have same or different specifications, so that obtaining dimensional detection standards corresponding to the uncoated portions of the electrode plates can accurately detect the electrode plates with the uncoated portions having same or different specifications.

In some embodiments, step S3000 includes: step S3100: obtaining dimensional detection standards S₁ ... S_{N} at the different detection positions P₁ ... P_{N} of the uncoated portion of the electrode plate. Uncoated portions of electrode plates may have constant or non-constant dimensions. Obtaining dimensional detection standards corresponding to the different detection positions P₁ ... P_{N} can accurately detect the electrode plates with the uncoated portions having the constant or non-constant dimensions.

In some embodiments, step S3100 includes: step S3110: determining absolute positions P_{A1} ... P_{AN} of each of the different detection positions P₁ ... P_{N}; and step S3120: obtaining, based on the determined absolute positions P_{A1} ... P_{AN}, the dimensional detection standards S₁ ... S_{N} at the different detection positions P₁ ... P_{N} of the uncoated portion of the electrode plate. Uncoated portions of electrode plates may have same or different specifications, and uncoated portions of electrode plates may have constant or non-constant dimensions. Obtaining detection standards corresponding to detection positions based on absolute positions of the detection positions can accurately detect electrode plates with uncoated portions having various specifications.

In some embodiments, the electrode plate includes at least one electrode plate having a preset mark; and step S3110 includes: step S3111: detecting the at least one electrode plate having the preset mark; and step S3112: determining, based on positions of the different detection positions P₁ ... P_{N} relative to the preset mark, the absolute positions P_{A1} ... P_{AN} of each of the different detection positions P₁ ... P_{N}. The preset mark is provided to mark the absolute positions of the detection positions, helping improve feasibility and convenience in determining the absolute positions.

According to the invention, step S2000 includes: step S2100: determining that the uncoated portion is folded in response to M consecutive dimensional parameters in the dimensional parameters D₁ ... D_{N} being less than the dimensional detection standard S, where M is a positive integer, and M is greater than or equal to 1 and M is less than or equal to N. By determining the quantity of dimensional parameters that appear continually less than the detection standard, folded electrode plates which do not meet the production requirements can be effectively detected.

According to the invention, step S2000 includes: step S2200: determining that the uncoated portion is folded in response to a quantity being greater than a preset threshold, where the quantity is a quantity of dimensional parameters which are less than the dimensional detection standard S in the dimensional parameters D₁ ... D_{N}, or determining that the uncoated portion is unfolded in response to a quantity being not greater than a preset threshold, where the quantity is a quantity of dimensional parameters which are less than the dimensional detection standard S in the dimensional parameters D₁ ... D_{N}. By determining the quantity of the dimensional parameters which are less than the dimensional detection standard S in the dimensional parameters D₁ ... D_{N}, folded electrode plates which do not meet the production requirements can be effectively detected.

In some embodiments, the dimensional detection standard S is M1/M2 of a nominal dimension of the uncoated portion in the longitudinal direction, where M1 and M2 are positive integers, and M2 is not less than M1; and the preset threshold is NM1/M2. Setting the dimensional detection standard S and the preset threshold in the foregoing form can artificially specify folding degrees of electrode plates which meet the production requirements.

According to a second aspect, an embodiment of this application provides a detection apparatus for electrode plate. The electrode plate includes a coated portion and an uncoated portion located on at least one side of the coated portion in a longitudinal direction. The detection apparatus includes, inter alia:
a parameter obtaining unit configured to obtain dimensional parameters D₁ ... D_{N} at different detection positions P₁ ... P_{N} of the uncoated portion in a transverse direction perpendicular to the longitudinal direction; and an electrode plate detection unit configured to compare the dimensional parameters D₁ ... D_{N} with a dimensional detection standard S to determine whether the uncoated portion is folded, where N is a positive integer, and N is greater than or equal to 2.

In some embodiments, the parameter obtaining unit is configured to obtain dimensional parameters of the uncoated portion in the longitudinal direction.

In some embodiments, the detection apparatus further includes: an electrode plate driving unit configured to drive the electrode plate to move along the transverse direction. The parameter obtaining unit is configured to obtain, during movement of the electrode plate along the transverse direction, the dimensional parameters D₁ ... D_{N} at the different detection positions P₁ ... P_{N} of the uncoated portion of the electrode plate.

In some embodiments, the detection apparatus further includes: a standard obtaining unit configured to obtain a dimensional detection standard S of the uncoated portion of the electrode plate.

In some embodiments, the standard obtaining unit is configured to obtain dimensional detection standards S₁ ... S_{N} at the different detection positions P₁ ... P_{N} of the uncoated portion of the electrode plate.

In some embodiments, the standard obtaining unit further includes: a positioning module configured to determine absolute positions P_{A1} ... P_{AN} of each of the different detection positions P₁ ... P_{N}, where the standard obtaining unit is configured to obtain, based on the determined absolute positions P_{A1} ... P_{AN}, the dimensional detection standards S₁ ... S_{N} at the different detection positions P₁ ... P_{N} of the uncoated portion of the electrode plate.

In some embodiments, the electrode plate includes at least one electrode plate having a preset mark. The positioning module further includes: a mark detection part configured to detect the at least one electrode plate having the preset mark; and a position determining part configured to determine, based on positions of the different detection positions P₁ ... P_{N} relative to the preset mark, the absolute positions P_{A1} ... P_{AN} of each of the different detection positions P₁ ... P_{N}.

According to the invention, the electrode plate detection unit is configured to determine that the uncoated portion is folded in response to M consecutive dimensional parameters in the dimensional parameters D₁ ... D_{N} being less than the dimensional detection standard S, where M is a positive integer, and M is greater than or equal to 1 and M is less than or equal to N.

According to the invention, the electrode plate detection unit is configured to: determine that the uncoated portion is folded in response to a quantity being greater than a preset threshold, where the quantity is a quantity of dimensional parameters which are less than the dimensional detection standard S in the dimensional parameters D₁ ... D_{N}; or determine that the uncoated portion is unfolded in response to a quantity being not greater than a preset threshold, where the quantity is a quantity of dimensional parameters which are less than the dimensional detection standard S in the dimensional parameters D₁ ... D_{N}.

In some embodiments, the parameter obtaining unit includes at least one of a laser detector, an ultrasonic detector, and an image obtaining and processing apparatus.

According to a third aspect not claimed as such, an embodiment of this application provides a stacking system including: the detection apparatus according to the foregoing embodiments; and a stacking apparatus configured to stack electrode plates.

According to a fourth aspect, an embodiment of this application provides a detection device for electrode plate. The detection device includes a memory and a processor in communication connection with the memory, where the memory stores machine-readable instructions, and when the machine-readable instructions are executed by the processor, the detection method according to the foregoing embodiments is implemented.

According to a fifth aspect, an embodiment of this application further provides a computer-readable storage medium, where the computer-readable storage medium stores a computer program, and when the computer program is executed by a processor, the detection method according to the foregoing embodiments is implemented.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, same reference signs throughout a plurality of accompanying drawings indicate the same or similar components or elements. These accompanying drawings are not necessarily drawn to scale. It should be noted that these accompanying drawings are merely intended to illustrate some embodiments disclosed in this application and should not be construed as any limitations on the scope of this application.
FIG. 1 is a schematic structural diagram of an electrode plate according to some embodiments of this application;
FIG. 2 is a schematic structural diagram of an electrode plate according to some embodiments of this application;
FIG. 3 is a schematic structural diagram of a folded electrode plate according to some embodiments of this application;
FIG. 4 is a schematic structural diagram of a folded electrode plate according to some embodiments of this application;
FIG. 5 is a schematic block diagram of a detection apparatus according to some embodiments of this application;
FIG. 6 is a schematic block diagram of a detection apparatus according to some embodiments of this application; and
FIG. 7 is a schematic structural diagram of a stacking system according to some embodiments of this application.

Description of reference signs:
electrode plate 10; coated portion 11; uncoated portion 12; preset mark 13;
detection apparatus 100; parameter obtaining unit 110; electrode plate detection unit 120; electrode plate driving unit 130; standard obtaining unit 140; positioning module 141; mark detection part 141A; position determining part 141B;
stacking system 1000; and stacking apparatus 200.

### DESCRIPTION OF EMBODIMENTS

The following describes in detail the embodiments of technical solutions of this application with reference to the accompanying drawings. The following embodiments and accompanying drawing are merely intended to describe the technical solutions of this application more clearly and therefore are used as just examples which do not constitute any limitations on the protection scope of this application. The drawings schematically illustrate only parts related to the technical solutions of this application and do not represent their actual structure as products.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, during production of a traction battery, a battery cell of the traction battery is typically formed by consecutive electrode plates through winding or stacking. The electrode plate includes a coated portion coated with an active substance and an uncoated portion uncoated with an active substance. During charging and discharging of the battery, the active substance in the coated portion undergoes electrochemical reactions, while the uncoated portion (typically referred to as a tab) is connected to an electrode terminal to form a current loop.

This applicant has noted that the electrode plate is very susceptible to folding during production due to its extremely small thickness and low strength. For example, when the uncoated portion (tab) for forming the current loop of the electrode plate is folded onto the coated portion, it leads to low capacity, short circuits, and even thermal runaway and fires during use of the battery. Therefore, it is necessary to control the production quality of the electrode plate.

In some cases, the electrode plate is detected manually. However, this method has low detection precision, missed detection, and false detection.

To solve the problems of low detection precision and accuracy in detection for electrode plate, the applicant has found through research that dimensional parameters of an electrode plate can be compared with dimensional detection specifications to improve the detection precision. In addition, detection is performed at multiple different detection positions to improve the detection accuracy.

Based on the foregoing considerations, this applicant, through in-depth research, has designed a detection method for electrode plate, a detection apparatus for electrode plate, a stacking system, a detection device, and a computer-readable storage medium. Dimensional parameters at different detection positions of an uncoated portion of an electrode plate are obtained, and the dimensional parameters are compared with a dimensional detection standard to determine whether the uncoated portion is folded. In this way, the precision and accuracy in detection for the electrode plate can be improved.

For ease of description, a detection method for electrode plate according to an embodiment of this application is used as an example for description.

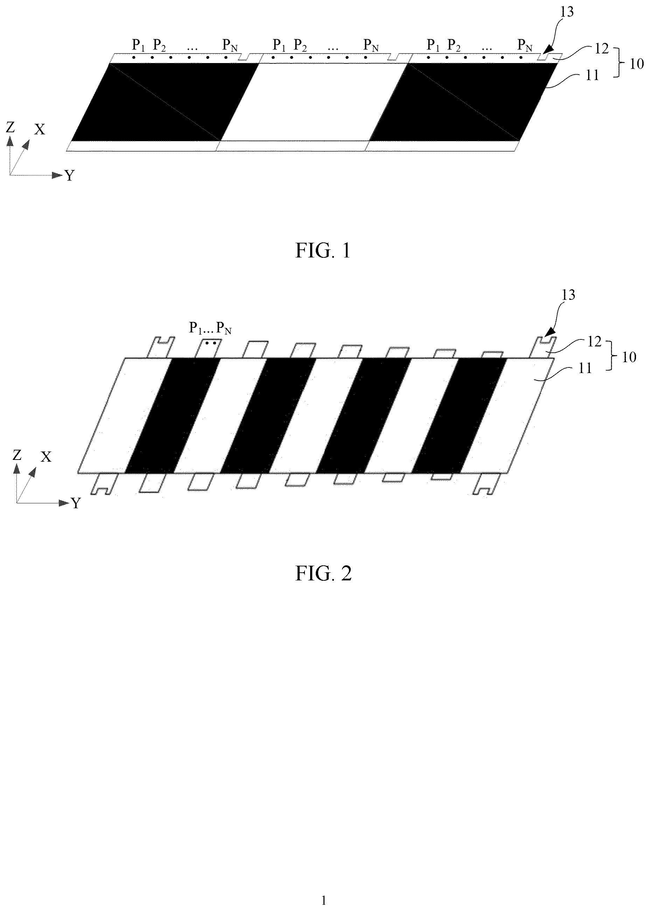

FIGs. 1 and 2 are schematic structural diagrams of an electrode plate according to some embodiments of this application. Referring to FIGs. 1 and 2, some embodiments of this application provide a detection method for electrode plate 10. The electrode plate 10 includes a coated portion 11 and an uncoated portion 12 located on at least one side of the coated portion 11 in a longitudinal direction. The detection method includes: step S1000: obtaining dimensional parameters D₁ ... D_{N} at different detection positions P₁ ... P_{N} of the uncoated portion 12 in a transverse direction perpendicular to the longitudinal direction; and step S2000: comparing the dimensional parameters D₁ ... D_{N} with a dimensional detection standard S to determine whether the uncoated portion 12 is folded, where N is a positive integer, and N is greater than or equal to 2.

The coated portion 11 of the electrode plate 10 refers to a portion coated with an active material. During charging and discharging of a battery, the active material in the coated portion 11 is used to undergo electrochemical reactions with an electrolyte around it. The uncoated portion 12 of the electrode plate 10 refers to a portion uncoated with an active material. This portion is typically referred to as a tab and connected to an electrode terminal to form a current loop during charging and discharging of a battery.

During actual production, a battery cell of a battery is formed by consecutive electrode plates including multiple electrode plates 10 through winding or stacking. The transverse direction refers to a direction in which multiple electrode plates 10 are arranged consecutively (referring to direction Y in FIGs. 1 and 2). The longitudinal direction is a direction perpendicular to the transverse direction in the plane in which the electrode plates 10 are located (referring to direction X in FIGs. 1 and 2). The uncoated portion 12 may be located on one side of the coated portion 11 in the longitudinal direction or may be located on both sides of the coated portion 11 in the longitudinal direction (as shown in FIGs. 1 and 2).

The uncoated portion 12 may be uncut (FIG. 1) or cut (FIG. 2). The uncoated portion 12 being uncut means that a width of the uncoated portion 12 in the transverse direction is equal to a width of the coated portion 11 in the transverse direction. The uncoated portion 12 being cut means that the width of the uncoated portion 12 in the transverse direction is less than the width of the coated portion 11 in the transverse direction.

A length of the uncut uncoated portion 12 in the longitudinal direction may be constant in the transverse direction (referring to FIG. 1) or non-constant. For example, the length of the uncut uncoated portion 12 in the longitudinal direction may decrease gradually along the transverse direction. A length of the cut uncoated portion 12 in the longitudinal direction may be same or different (referring to FIG. 2).

In the technical solutions of the embodiments of this application, the dimensional parameters of the uncoated portion 12 of the electrode plate 10 are compared with the corresponding dimensional detection standards to improve the detection precision; and detection is performed at multiple positions of the uncoated portion 12 of the electrode plate 10 to improve the detection accuracy.

According to some embodiments of this application, the dimensional parameters are dimensional parameters of the uncoated portion 12 in the longitudinal direction.

The dimensional parameter in the longitudinal direction refers to the length of the uncoated portion 12 in the longitudinal direction.

It can be understood that the length of the uncoated portion 12 in the longitudinal direction is compared with its nominal length to accurately detect folding of the electrode plate.

According to some embodiments of this application, step S1000 includes: step S1100: driving the electrode plate 10 to move along the transverse direction; and step S1200: obtaining, during movement of the electrode plate 10 along the transverse direction, the dimensional parameters D₁ ... D_{N} at the different detection positions P₁ ... P_{N} of the uncoated portion 12 of the electrode plate 10.

During production of the battery, the consecutive electrode plates including the multiple electrode plates 10 are driven by a driving unit to travel so as to enter a stacking apparatus or a winding apparatus. The dimensional parameters are obtained during movement of the electrode plate 10, that is, online detection is implemented during production.

In some embodiments, the obtaining, during movement of the electrode plate 10 along the transverse direction, the dimensional parameters D₁ ... D_{N} at the different detection positions P₁ ... P_{N} of the uncoated portion 12 of the electrode plate 10 may include: obtaining, in response to the electrode plate 10 moving a predetermined distance along the transverse direction each time, the dimensional parameters of the uncoated portion 12 of the electrode plate 10 once, so as to obtain the dimensional parameters D₁ ... D_{N} at the different detection positions P₁ ... P_{N} of the uncoated portion 12.

Online detection performed during production can process electrode plates which do not meet production requirements in a timely manner to prevent such electrode plates from entering subsequent production procedures, which improves the yield of products and avoids waste of production materials.

Dimensional parameters of the electrode plate 10 are collected once when the electrode plate 10 is driven to travel a predetermined distance each time so as to obtain the dimensional parameters D₁ ... D_{N} at the different detection positions P₁ ... P_{N}, which can make electrode plate detection applicable to different traveling speeds of electrode plates, without missed detection and false detection caused by acceleration or deceleration in the traveling speeds of the electrode plates in the production procedures.

In some embodiments, before step S2000, the detection method further includes: step S3000: obtaining a dimensional detection standard S of the uncoated portion 12 of the electrode plate 10.

When uncoated portions 12 have a same specification, various uncoated portions 12 may correspond to a same dimensional detection standard S. When uncoated portions 12 have different specifications (referring to FIG. 2), various uncoated portions 12 may correspond to different dimensional detection standards S. Step S3000 may be performed before or after step S1000 or may be performed simultaneously with step S1000.

Obtaining dimensional detection standards corresponding to uncoated portions of electrode plates can accurately detect the electrode plates with the uncoated portions having same or different specifications.

In some embodiments, step S3000 includes: step S3100: obtaining dimensional detection standards S₁ ... S_{N} at the different detection positions P₁ ... P_{N} of the uncoated portion 12 of the electrode plate 10.

When the dimension of the uncoated portion 12 is constant, different detection positions P₁ ... P_{N} of the uncoated portion 12 may correspond to a same detection standard. When the dimension of the uncoated portion 12 is non-constant, for example, decreases gradually in the transverse direction, the different detection positions P₁ ... P_{N} of the uncoated portion 12 may correspond to different detection standards.

Obtaining the dimensional detection standards S₁ ... S_{N} corresponding to the different detection positions P₁ ... P_{N} of the uncoated portion 12 can accurately detect the electrode plates with the uncoated portions having the constant or non-constant dimensions.

In some embodiments, step S3100 includes: step S3110: determining absolute positions P_{A1} ... P_{AN} of each of the different detection positions P₁ ... P_{N}; and step S3120: obtaining, based on the determined absolute positions P_{A1} ... P_{AN}, the dimensional detection standards S₁ ... S_{N} at the different detection positions P₁ ... P_{N} of the uncoated portion 12 of the electrode plate 10.

The absolute positions P_{A1} ... P_{AN} refer to absolute positions of the detection positions P₁ ... P_{N} in consecutive electrode plates including multiple electrode plates 10. For example, P_{A1} may refer to the 1st detection position of an uncoated portion 12 of the A-th electrode plate 10 in the consecutive electrode plates. As described above, the uncoated portion 12 of the A-th electrode plate 10 and uncoated portions 12 of other electrode plates 10 may have same or different specifications, and the uncoated portion 12 of the A-th electrode plate 10 may have a constant or non-constant dimension.

The absolute positions P_{A1} ... P_{AN} of each of the different detection positions P₁ ... P_{N} are determined to obtain the dimensional detection standards S₁ ... S_{N} at the different detection positions P₁ ... P_{N} of the uncoated portion 12 of the electrode plate 10, which can accurately detect electrode plates with uncoated portions having various specifications.

In some embodiments, the electrode plate 10 includes at least one electrode plate 10 having a preset mark 13; and step S3110 includes: step S3111: detecting the at least one electrode plate 10 having the preset mark 13; and step S3112: determining, based on positions of the different detection positions P₁ ... P_{N} relative to the preset mark 13, the absolute positions P_{A1} ... P_{AN} of each of the different detection positions P₁ ... P_{N}.

The preset mark 13 may be located on the coated portion 11 or uncoated portion 12 of the electrode plate 10. The preset mark 13 may be a through hole (referring to FIGs. 1 and 2) or may be a mark having a color difference from the coated portion 11 or the uncoated portion 12. The preset mark 13 may have various shapes.

Specifications of electrode plates 10 may vary periodically. For example, referring to FIG. 2, multiple electrode plates 10 (8 electrode plates shown in FIG. 2) with uncoated portions 12 having gradient dimensions can form a group, and the consecutive electrode plates may include multiple such groups. The preset mark 13 may be provided on the 1st electrode plate 10 in each group.

The preset mark is provided to mark the absolute positions of the detection positions in the consecutive electrode plates, helping improve feasibility and convenience in determining the absolute positions.

In some embodiments, step S2000 includes: step S2100: determining that the uncoated portion 12 is folded in response to M consecutive dimensional parameters in the dimensional parameters D₁ ... D_{N} being less than the dimensional detection standard S, where M is a positive integer, and M is greater than or equal to 1 and M is less than or equal to N.

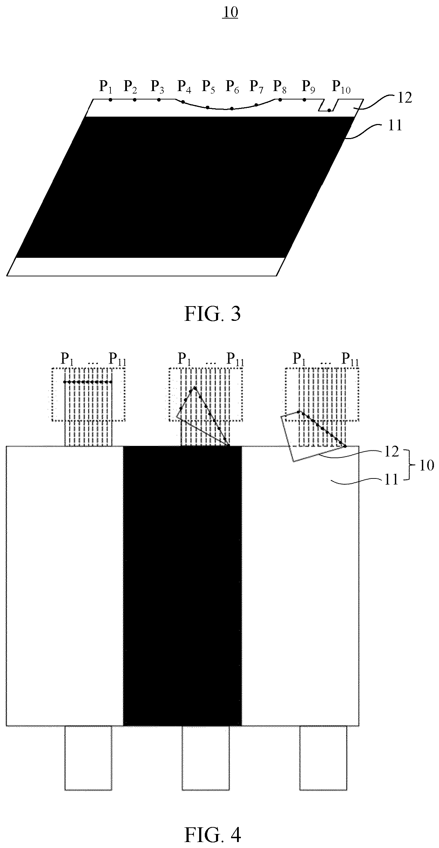

FIG. 3 is a schematic structural diagram of a folded electrode plate according to some embodiments of this application. Referring to FIG. 3, in some embodiments, the dimensional parameters D₁ ... D_{N} may be a length of the uncoated portion 12 at the detection positions P₁ ... P_{N} (edges of the uncoated portion 12) and in the longitudinal direction. The detection standard S may be a nominal length of the uncoated portion 12 in the longitudinal direction. In these embodiments, M may be 2. To be specific, in response to 2 consecutive dimensional parameters being less than the nominal length of the uncoated portion 12, it is determined that the uncoated portion 12 is folded.

By determining the quantity of dimensional parameters that appear continually less than the detection standard, folded electrode plates which do not meet the production requirements can be effectively detected.

In some embodiments, step S2000 includes: step S2200: determining that the uncoated portion 12 is folded in response to a quantity being less than a preset threshold, where the quantity is a quantity of dimensional parameters which are less than the dimensional detection standard S in the dimensional parameters D₁ ... D_{N}, or determining that the uncoated portion 12 is unfolded in response to a quantity being not greater than a preset threshold, where the quantity is a quantity of dimensional parameters which are less than the dimensional detection standard S in the dimensional parameters D₁ ... D_{N}.

FIG. 4 is a schematic structural diagram of a folded electrode plate according to some embodiments of this application. Referring to FIG. 4, in some embodiments, the dimensional parameters D₁ ... D_{N} may be a length of the uncoated portion 12 at the detection positions P₁ ... P_{N} (edges of the uncoated portion 12) and in the longitudinal direction. The detection standard S may be a portion of a nominal length of the uncoated portion 12 in the longitudinal direction. For example, N may be 11, the detection standard S may be half of the nominal length of the uncoated portion 12 in the longitudinal direction, and the preset threshold may be 5. In this case, in response to the quantity being not greater than 5, where the quantity is a quantity of dimensional parameters which are less than the dimensional detection standard S in the dimensional parameters D₁ ... D₁₁, it is determined that the uncoated portion 12 is unfolded, so that the electrode plate meets the production requirements (referring to a left electrode plate and a middle electrode plate in FIG. 4); or in response to the quantity being greater than 5, where the quantity is a quantity of dimensional parameters which are less than the dimensional detection standard S in the dimensional parameters D₁ ... D₁₁, it is determined that the uncoated portion 12 is folded, so that the electrode plate does not meet the production requirements (referring to a right electrode plate in FIG. 4).

By determining the quantity of the dimensional parameters which are less than the dimensional detection standard S in the dimensional parameters D₁ ... D_{N}, folded electrode plates which do not meet the production requirements can be effectively detected.

In some embodiments, the dimensional detection standard S is M1/M2 of a nominal dimension of the uncoated portion 12 in the longitudinal direction, where M1 and M2 are positive integers, and M2 is not less than M1; and the preset threshold is NM1/M2.

In an embodiment, N may be 20, the dimensional detection standard S may be 1/2 of the nominal dimension of the uncoated portion 12 in the longitudinal direction, and the preset threshold may be 10. In another embodiment, N may be 20, the dimensional detection standard S may be 4/5 of the nominal dimension of the uncoated portion 12 in the longitudinal direction, and the preset threshold may be 16. It can be understood that a smaller dimensional detection standard S allows for a smaller quantity of the dimensional parameters which are less than the detection standard S in the dimensional parameters D₁ ... D_{N}.

Setting the dimensional detection standard S and the preset threshold in the foregoing form can artificially specify folding degrees of electrode plates which meet the production requirements.

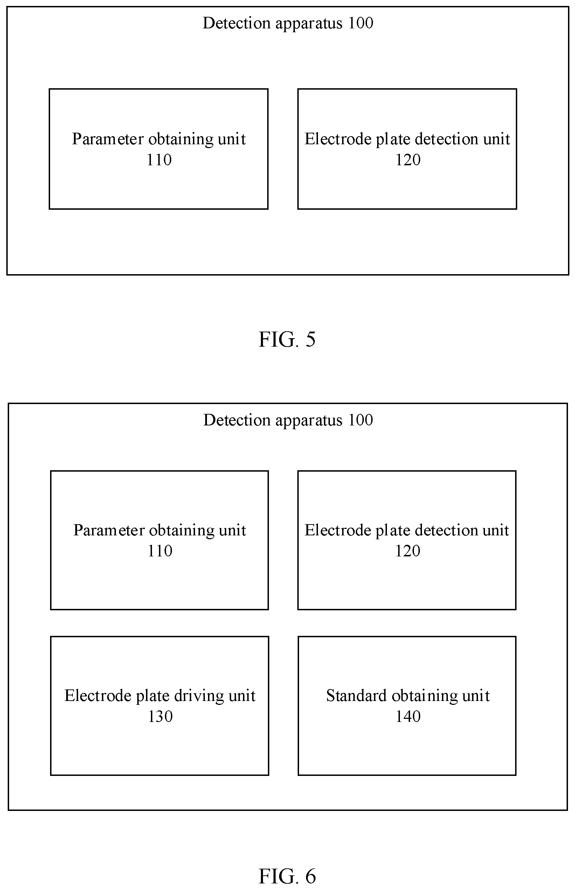

FIG. 5 is a schematic block diagram of a detection apparatus according to some embodiments of this application. Referring to FIG. 5, some embodiments of this application provide a detection apparatus 100 for electrode plate. The electrode plate includes a coated portion and an uncoated portion located on at least one side of the coated portion in a longitudinal direction. The detection apparatus includes: a parameter obtaining unit 110 configured to obtain dimensional parameters D₁ ... D_{N} at different detection positions P₁ ... P_{N} of the uncoated portion in a transverse direction perpendicular to the longitudinal direction; and an electrode plate detection unit 120 configured to compare the dimensional parameters D₁ ... D_{N} with a dimensional detection standard S to determine whether the uncoated portion is folded, where N is a positive integer, and N is greater than or equal to 2.

The electrode plate, the coated portion, the uncoated portion, the longitudinal direction, the transverse direction, the detection positions P₁ ... P_{N}, the dimensional parameters D₁ ... D_{N}, and the dimensional detection standard S are similar to those described above with reference to FIGs. 1 and 2. Therefore, details are not described below. The parameter obtaining unit 110 can obtain the dimensional parameters D₁ ... D_{N} when the electrode plate is static or dynamic. The electrode plate detection unit 120 may include a processor and a memory, where the detection standard S may be stored in the memory, and the processor is configured to: obtain the dimensional parameters D₁ ... D_{N} from the parameter obtaining unit 110; obtain the dimensional detection standard S stored in the memory in advance; and compare the dimensional parameters D₁ ... D_{N} with the dimensional detection standard S to obtain detection results.

In the technical solutions of the embodiments of this application, the dimensional parameters of the uncoated portion of the electrode plate are compared with the corresponding dimensional detection standards to improve the detection precision; and detection is performed at multiple positions of the uncoated portion of the electrode plate to improve the detection accuracy.

In some embodiments, the dimensional parameters are dimensional parameters of the uncoated portion in the longitudinal direction.

The dimensional parameter in the longitudinal direction refers to the length of the uncoated portion in the longitudinal direction.

The length of the uncoated portion in the longitudinal direction is compared with its nominal length to accurately detect folding of the electrode plate.

FIG. 6 is a schematic block diagram of a detection apparatus according to some embodiments of this application. Referring to FIG. 6, in some embodiments, the detection apparatus 100 further includes: an electrode plate driving unit 130 configured to drive the electrode plate to move along the transverse direction. The parameter obtaining unit 110 is configured to obtain, during movement of the electrode plate along the transverse direction, the dimensional parameters D₁ ... D_{N} at the different detection positions P₁ ... P_{N} of the uncoated portion of the electrode plate.

In some embodiments, the electrode plate driving unit 130 may be a driving roller. The driving roller may include an encoder, where the encoder is configured to provide feedback on a movement distance of the electrode plate under driving of the driving roller.

Detection is performed during movement of the electrode plate, that is, online detection performed during production can process electrode plates which do not meet production requirements in a timely manner to prevent such electrode plates from entering subsequent production procedures, which improves the yield of products and avoids waste of production materials.

Referring to FIG. 6, in some embodiments, the detection apparatus 100 further includes: a standard obtaining unit 140 configured to obtain a dimensional detection standard S of the uncoated portion of the electrode plate.

When uncoated portions have a same specification, various uncoated portions may correspond to a same dimensional detection standard S. When uncoated portions have different specifications (referring to FIG. 2), various uncoated portions may correspond to different dimensional detection standards S. The standard obtaining unit 140 is configured to obtain dimensional detection standards S corresponding to dimensional parameters of uncoated portions of various electrode plates. In some embodiments, the standard obtaining unit 140 is in communication connection with the electrode plate detection unit 120 and is configured to send correspondences between the dimensional parameters of the uncoated portions of the various electrode plates and the dimensional detection standards S to the electrode plate detection unit 120. The electrode plate detection unit 120 is configured to compare the dimensional parameters D₁ ... D_{N} with the dimensional detection standards S according to the correspondences.

Obtaining dimensional detection standards corresponding to uncoated portions of electrode plates can accurately detect the electrode plates with the uncoated portions having same or different specifications.

In some embodiments, the standard obtaining unit 140 is configured to obtain dimensional detection standards S₁ ... S_{N} at the different detection positions P₁ ... P_{N} of the uncoated portion of the electrode plate.

When the dimension of the uncoated portion is constant, different detection positions P₁ ... P_{N} of the uncoated portion may correspond to a same detection standard. When the dimension of the uncoated portion is non-constant, for example, decreases gradually in the transverse direction, the different detection positions P₁ ... P_{N} of the uncoated portion may correspond to different detection standards. The standard obtaining unit 140 is configured to obtain the dimensional detection standards S₁ ... S_{N} corresponding to the dimensional parameters at the different detection positions P₁ ... P_{N} of the uncoated portion. In some embodiments, the standard obtaining unit 140 is in communication connection with the electrode plate detection unit 120 and is configured to send correspondences between the obtained dimensional parameters at the different detection positions P₁ ... P_{N} of the uncoated portion and the dimensional detection standards to the electrode plate detection unit 120. The electrode plate detection unit 120 is configured to compare the dimensional parameters D₁ ... D_{N} with the dimensional detection standards S₁ ... S_{N} according to the correspondences.

Obtaining the dimensional detection standards S₁ ... S_{N} corresponding to the different detection positions P₁ ... P_{N} of the uncoated portion can accurately detect the electrode plates with the uncoated portions having the constant or non-constant dimensions.

In some embodiments, the standard obtaining unit 140 further includes: a positioning module 141 configured to determine absolute positions P_{A1} ... P_{AN} of each of the different detection positions P₁ ... P_{N}, where the standard obtaining unit 140 is configured to obtain, based on the determined absolute positions P_{A1} ... P_{AN}, the dimensional detection standards S₁ ... S_{N} at the different detection positions P₁ ... P_{N} of the uncoated portion of the electrode plate.

The absolute positions P_{A1} ... P_{AN} refer to absolute positions of the detection positions P₁ ... P_{N} in consecutive electrode plates including multiple electrode plates. For example, P_{A1} may refer to the 1st detection position of an uncoated portion of the A-th electrode plate in the consecutive electrode plates. As described above, the uncoated portion of the A-th electrode plate and uncoated portions of other electrode plates may have same or different specifications, and the uncoated portion of the A-th electrode plate may have a constant or non-constant dimension.

The absolute positions P_{A1} ... P_{AN} of each of the different detection positions P₁ ... P_{N} are determined to obtain the dimensional detection standards S₁ ... S_{N} at the different detection positions P₁ ... P_{N} of the uncoated portion of the electrode plate, which can accurately detect electrode plates with uncoated portions having various specifications.

In an embodiment, the electrode plate includes at least one electrode plate having a preset mark. The positioning module 141 further includes: a mark detection part 141A configured to detect the at least one electrode plate having the preset mark; and a position determining part 141B configured to determine, based on positions of the different detection positions P₁ ... P_{N} relative to the preset mark, the absolute positions P_{A1} ... P_{AN} of each of the different detection positions P₁ ... P_{N}.

The preset mark is similar to that described above with reference to FIGs. 1 and 2. Therefore, details are not described below. In some embodiments, the mark detection part 141A includes at least one of a laser detector, an ultrasonic detector, and an image obtaining and processing apparatus. In some embodiments, the position determining part 141B may be in communication connection with the mark detection part 141A and the electrode plate driving unit 130 and is configured to determine, in response to the mark detection part 141A having detected the at least one electrode plate having the preset mark and based on positions of the different detection positions P₁ ... P_{N} relative to the preset mark 13, the absolute positions P_{A1} ... P_{AN} of each of the different detection positions P₁ ... P_{N} by using a signal fed back by the electrode plate driving unit 130 (for example, a movement distance of the electrode plate under driving of the driving unit 130).

Provision of the preset mark and use of the mark detection part 141A and the position determining part 141B help improve feasibility and convenience in determining the absolute positions.

In some embodiments, the electrode plate detection unit 120 is configured to determine that the uncoated portion is folded in response to M consecutive dimensional parameters in the dimensional parameters D₁ ... D_{N} being less than the dimensional detection standard S, where M is a positive integer, and M is greater than or equal to 1 and M is less than or equal to N.

A method for the electrode plate detection unit 120 to determine whether the uncoated portion is folded is similar to that described above with reference to FIG. 3. Therefore, details are not described.

The electrode plate detection unit 120 can effectively detect folded electrode plates which do not meet the production requirements by determining the quantity of dimensional parameters that appear continually less than the detection standard.

In some embodiments, the electrode plate detection unit 120 is configured to: determine that the uncoated portion is folded in response to a quantity being greater than a preset threshold, where the quantity is a quantity of dimensional parameters which are less than the dimensional detection standard S in the dimensional parameters D₁ ... D_{N}; or determine that the uncoated portion is unfolded in response to a quantity being not greater than a preset threshold, where the quantity is a quantity of dimensional parameters which are less than the dimensional detection standard S in the dimensional parameters D₁ ... D_{N}.

A method for the electrode plate detection unit 120 to determine whether the uncoated portion is folded is similar to that described above with reference to FIG. 4. Therefore, details are not described.

The electrode plate detection unit 120 can effectively detect folded electrode plates which do not meet the production requirements by determining the quantity of the dimensional parameters which are less than the dimensional detection standard S in the dimensional parameters D₁ ... D_{N}.

In some embodiments, the dimensional detection standard S is M1/M2 of a nominal dimension of the uncoated portion in the longitudinal direction, where M1 and M2 are positive integers, and M2 is not less than M1; and the preset threshold is NM1/M2.

Setting the dimensional detection standard S and the preset threshold in the foregoing form can artificially specify folding degrees of electrode plates which meet the production requirements.

In some embodiments, the parameter obtaining unit 110 includes at least one of a laser detector, an ultrasonic detector, and an image obtaining and processing apparatus.

In some embodiments, the parameter obtaining unit 110 may be a digital laser detector. A detection window of the digital laser detector may be, for example, shown as a rectangular dashed box in FIG. 4. The digital laser detector can scan electrode plates in the detection window and provide feedback on dimensional parameters of edges of the electrode plates in the longitudinal direction. Dimensional parameters corresponding to detection positions not within the detection window may be fed back as values smaller than a dimensional detection standard.

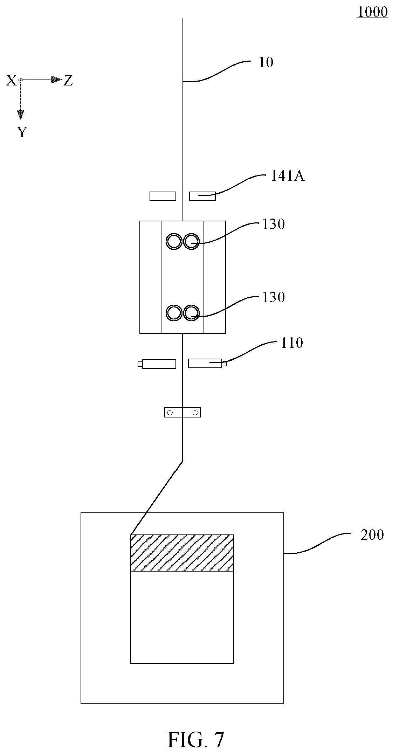

FIG. 7 is a schematic structural diagram of a stacking system according to some embodiments of this application. Referring to FIG. 7, some embodiments of this application provide a stacking system 1000 including: the detection apparatus 100 according to any one of the foregoing embodiments; and a stacking apparatus 200 configured to stack electrode plates 10.

Referring to FIG. 7, in a specific embodiment, the driving unit 130 may be a driving roller for driving the electrode plate 10 to travel during production, where the driving roller may include an encoder for providing feedback on a movement distance of the electrode plate 10 under driving of the driving roller. The parameter obtaining unit 110 may be disposed upstream of the stacking apparatus 200 in a direction relative to movement of the electrode plate 10 and is configured to obtain dimensional parameters D₁ ... D_{N} at different detection positions P₁ ... P_{N} of an uncoated portion in a transverse direction (direction Y) perpendicular to a longitudinal direction (direction X). The mark detection part 141A may be disposed upstream of the parameter obtaining unit 110 in a direction relative to movement of the electrode plate 10 and is configured to detect an electrode plate 10 having a preset mark.

During production, the driving unit 130 drives the electrode plate 10 to move along the transverse direction (direction Y). During movement of the electrode plate 10, the parameter obtaining unit 110 is configured to obtain, in response to the electrode plate 10 being driven to move a predetermined distance each time, the dimensional parameters of the uncoated portion of the electrode plate 10 once, so as to obtain the dimensional parameters D₁ ... D_{N} at the different detection positions P₁ ... P_{N} of the uncoated portion of the electrode plate 10. During movement of the electrode plate 10, the mark detection part 141A is configured to detect the electrode plate 10 having the preset mark. The position determining part 141B is configured to determine, in response to the mark detection part 141A having detected the electrode plate 10 having the preset mark, absolute positions P_{A1} ... P_{AN} of each of the detection positions P₁ ... P_{N} in consecutive electrode plates by using a movement distance of the electrode plate 10 fed back by the driving unit 130. The standard obtaining unit 140 is configured to: obtain, based on the determined absolute positions P_{A1} ... P_{AN}, dimensional detection standards S₁ ... S_{N} at the different detection positions P₁ ... P_{N} of the uncoated portion of the electrode plate 10; obtain, based on the movement distance of the electrode plate 10 fed back by the driving unit 130, correspondences between the dimensional parameters D₁ ... D_{N} at the different detection positions P₁ ... P_{N} of the uncoated portion of the electrode plate 10 and the dimensional detection standards S₁ ... S_{N}; and send the correspondences to the electrode plate detection unit 120. The electrode plate detection unit 120 is configured to: obtain the dimensional parameters D₁ ... D_{N} at the different detection positions P₁ ... P_{N} from the parameter obtaining unit 110; obtain, based on the correspondences, the dimensional detection standards S₁ ... S_{N} corresponding to the different detection positions P₁ ... P_{N} from the memory; and compare the dimensional parameters D₁ ... D_{N} with the dimensional detection standards S₁ ... S_{N} to obtain detection results.

A method of comparing the dimensional parameters D₁ ... D_{N} with the dimensional detection standards S₁ ... S_{N} to detect the electrode plate may be the detection method described above with reference to FIGs. 3 and 4. In an embodiment, when folded electrode plates which do not meet the production requirements are detected, the stacking apparatus 200 can transfer a section of consecutive electrode plates including the folded electrode plates to a pending processing region to prevent the folded electrode plates from entering subsequent production procedures (for example, stacking).

It can be understood that the detection method and detection apparatus for electrode plate and stacking system according to the embodiments of this application can implement online detection for electrode plate. Such detection has high precision and accuracy and is not affected by an electrode plate traveling speed.

Some embodiments of this application provide a detection device for electrode plate. The detection device includes a memory and a processor in communication connection with the memory, where the memory stores machine-readable instructions, and when the machine-readable instructions are executed by the processor, the detection method according to any one of the foregoing embodiments is implemented.

Some embodiments of this application further provide a computer-readable storage medium, where the computer-readable storage medium stores a computer program, and when the computer program is executed by a processor, the detection method according to any one of the foregoing embodiments is implemented.

In conclusion, it should be noted that the foregoing embodiments are for description of the technical solutions of this application only rather than for limiting this application. The present invention are defined by the claims.

## Claims

1. A detection method for electrode plate, wherein the electrode plate comprises a coated portion and an uncoated portion located on at least one side of the coated portion in a longitudinal direction; and the detection method comprises:
step S1000: obtaining dimensional parameters D₁ ... D_{N} at different detection positions P₁ ... P_{N} of the uncoated portion in a transverse direction perpendicular to the longitudinal direction; and
step S2000: comparing the dimensional parameters D₁ ... D_{N} with a dimensional detection standard S to determine whether the uncoated portion is folded,
wherein N is a positive integer, and N is greater than or equal to 2;
wherein step S2000 comprises at least one of step S2100 and step S2200:
step S2100: determining that the uncoated portion is folded in response to M consecutive dimensional parameters in the dimensional parameters D₁ ... D_{N} being less than the dimensional detection standard S,
wherein M is a positive integer, and M is greater than or equal to 1 and less than or equal to N;
step S2200: determining that the uncoated portion is folded in response to a quantity being greater than a preset threshold, wherein the quantity is a quantity of dimensional parameters which are less than the dimensional detection standard S in the dimensional parameters D₁ ... D_{N}, or
determining that the uncoated portion is unfolded in response to a quantity being not greater than a preset threshold, wherein the quantity is a quantity of dimensional parameters which are less than the dimensional detection standard S in the dimensional parameters D₁ ... D_{N}.

2. The detection method according to claim 1, wherein the dimensional parameters are dimensional parameters of the uncoated portion in the longitudinal direction.

3. The detection method according to claim 2, wherein step S1000 comprises:
step S1100: driving the electrode plate to move along the transverse direction;
and step S1200: obtaining, during movement of the electrode plate along the transverse direction, the dimensional parameters D₁ ... D_{N} at the different detection positions P₁ ... P_{N} of the uncoated portion of the electrode plate.

4. The detection method according to claim 1, wherein before step S2000, the detection method further comprises:
step S3000: obtaining a dimensional detection standard S of the uncoated portion of the electrode plate.

5. The detection method according to claim 4, wherein step S3000 comprises:
step S3100: obtaining dimensional detection standards S₁ ... S_{N} at the different detection positions P₁ ... P_{N} of the uncoated portion of the electrode plate.

6. The detection method according to claim 5, wherein step S3100 comprises:
step S3110: determining absolute positions P_{A1} ... P_{AN} of each of the different detection positions P₁ ... P_{N}; and
step S3120: obtaining, based on the determined absolute positions P_{A1} ... P_{AN}, the dimensional detection standards S₁ ... S_{N} at the different detection positions P₁ ... P_{N} of the uncoated portion of the electrode plate.

7. The detection method according to claim 6, wherein the electrode plate comprises at least one electrode plate having a preset mark; and step S3110 comprises:
step S3111: detecting the at least one electrode plate having the preset mark; and
step S3112: determining, based on positions of the different detection positions P₁ ... P_{N} relative to the preset mark, the absolute positions P_{A1} ... P_{AN} of each of the different detection positions P₁ ... P_{N}.

8. The detection method according to any one of claims 1 to 7, wherein the dimensional detection standard S is M1/M2 of a nominal dimension of the uncoated portion in the longitudinal direction, M1 and M2 are positive integers, and M2 is not less than M1; and the preset threshold is NM1/M2.

9. A detection apparatus (100) for electrode plate (10), wherein the electrode plate (10) comprises a coated portion (11) and an uncoated portion (12) located on at least one side of the coated portion (11) in a longitudinal direction; and the detection apparatus (100) comprises:
a parameter obtaining unit (110) configured to obtain dimensional parameters D₁ ... D_{N} at different detection positions P₁ ... P_{N} of the uncoated portion (12) in a transverse direction perpendicular to the longitudinal direction; and
an electrode plate detection unit (12) configured to compare the dimensional parameters D₁ ... D_{N} with a dimensional detection standard S to determine whether the uncoated portion (12) is folded,
wherein N is a positive integer, and N is greater than or equal to 2;
wherein the electrode plate detection unit is configured to determine that the uncoated portion is folded in response to M consecutive dimensional parameters in the dimensional parameters D₁ ... D_{N} being less than the dimensional detection standard S, wherein M is a positive integer, and M is greater than or equal to 1 and less than or equal to N, or
wherein the electrode plate detection unit is configured to: determine that the uncoated portion is folded in response to a quantity being greater than a preset threshold, wherein the quantity is a quantity of dimensional parameters which are less than the dimensional detection standard S in the dimensional parameters D₁ ... D_{N} ; or determine that the uncoated portion is unfolded in response to a quantity being not greater than a preset threshold, wherein the quantity is a quantity of dimensional parameters which are less than the dimensional detection standard S in the dimensional parameters D₁ ... D_{N}.

10. The detection apparatus (100) according to claim 9, further comprising: a standard obtaining unit (140) configured to obtain a dimensional detection standard S of the uncoated portion (12) of the electrode plate (10),
wherein preferably, the standard obtaining unit (140) is configured to obtain dimensional detection standards S₁ ... S_{N} at the different detection positions P₁ ... P_{N} of the uncoated portion (12) of the electrode plate (10),
wherein more preferably,
the standard obtaining unit (140) further comprises a positioning module (141) configured to determine absolute positions P_{A1} ... P_{AN} of each of the different detection positions P₁ ... P_{N}; and
the standard obtaining unit (140) is configured to obtain, based on the determined absolute positions P_{A1} ... P_{AN}, the dimensional detection standards S₁ ... S_{N} at the different detection positions P₁ ... P_{N} of the uncoated portion (12) of the electrode plate (10),
wherein even more preferably,
the electrode plate (10) comprises at least one electrode plate (10) having a preset mark (13);
and the positioning module (141) further comprises:
a mark detection part (141A) configured to detect the at least one electrode plate (10) having the preset mark (13); and
a position determining part (141B) configured to determine, based on positions of the different detection positions P₁ ... P_{N} relative to the preset mark (13), the absolute positions P_{A1} ... P_{AN} of each of the different detection positions P₁ ... P_{N}.

11. A detection device for electrode plate, wherein the detection device comprises a memory and a processor in communication connection with the memory, wherein the memory stores machine-readable instructions, and when the machine-readable instructions are executed by the processor, the detection method according to any one of claims 1 to 8 is implemented.

12. A computer-readable storage medium, wherein the computer-readable storage medium stores a computer program, and when the computer program is executed by a processor, the detection method according to any one of claims 1 to 8 is implemented.

## Patentansprüche

1. Detektionsverfahren für Elektrodenplatten, wobei die Elektrodenplatte einen beschichteten Abschnitt und einen unbeschichteten Abschnitt, der auf mindestens einer Seite des beschichteten Abschnitts in Längsrichtung angeordnet ist, umfasst; und das Detektionsverfahren umfasst:
Schritt S1000: Erhalten von Dimensionsparametern D₁ ... D_{N} an verschiedenen Detektionspositionen P₁ ... P_{N} des unbeschichteten Abschnitts in einer Querrichtung senkrecht zur Längsrichtung; und
Schritt S2000: Vergleichen der Dimensionsparameter D₁ ... D_{N} mit einem Dimensionsdetektionsstandard S, um zu bestimmen, ob der unbeschichtete Abschnitt gefaltet ist, wobei N eine positive ganze Zahl ist und N größer als oder gleich 2 ist; wobei Schritt S2000 mindestens einen von Schritt S2100 und Schritt S2200 umfasst:
Schritt S2100: Bestimmen, dass der unbeschichtete Abschnitt gefaltet ist, wenn M aufeinanderfolgende Dimensionsparameter in den Dimensionsparametern D₁ ... D_{N} kleiner als der Dimensionsdetektionsstandard S sind,
wobei M eine positive ganze Zahl ist und M größer als oder gleich 1 und kleiner als oder gleich N ist;
Schritt S2200: Bestimmen, dass der unbeschichtete Abschnitt gefaltet ist, als Reaktion darauf, dass eine Menge größer als ein voreingestellter Schwellwert ist, wobei die Menge eine Menge von Dimensionsparametern ist, die kleiner als der Dimensionsdetektionsstandard S in den Dimensionsparametern D₁ ... D_{N} sind, oder
Bestimmen, dass der unbeschichtete Abschnitt nicht gefaltet ist, als Reaktion darauf, dass eine Menge nicht größer als ein voreingestellter Schwellwert ist, wobei die Menge eine Menge von Dimensionsparametern ist, die kleiner als der Dimensionsdetektionsstandard S in den Dimensionsparametern D₁ ... D_{N} sind.

2. Detektionsverfahren gemäß Anspruch 1, wobei die Dimensionsparameter Dimensionsparameter des unbeschichteten Abschnitts in der Längsrichtung sind.

3. Detektionsverfahren gemäß Anspruch 2, wobei Schritt S1000 umfasst:
Schritt S1100: Antreiben der Elektrodenplatte, so dass sie sich in Querrichtung bewegt;
und Schritt S1200: Erhalten, während der Bewegung der Elektrodenplatte entlang der Querrichtung, der Dimensionsparameter D₁ ... D_{N} an den verschiedenen Detektionspositionen P₁ ... P_{N} des unbeschichteten Abschnitts der Elektrodenplatte.

4. Detektionsverfahren gemäß Anspruch 1, wobei vor Schritt S2000 das Detektionsverfahren ferner umfasst:
Schritt S3000: Erhalten eines Dimensionsdetektionsstandards S des unbeschichteten Abschnitts der Elektrodenplatte.

5. Detektionsverfahren gemäß Anspruch 4, wobei Schritt S3000 umfasst:
Stufe S3100: Erhalten von Dimensionsdetektionsstandards S₁ ... S_{N} an den verschiedenen Detektionspositionen P₁ ... P_{N} des unbeschichteten Abschnitts der Elektrodenplatte.

6. Detektionsverfahren gemäß Anspruch 5, wobei Schritt S3100 umfasst:
Schritt S3110: Bestimmen der absoluten Positionen P_{A1} ... P_{AN} jeder der verschiedenen Detektionspositionen P₁ ... P_{N}; und
Schritt S3120: Erhalten, basierend auf den bestimmten absoluten Positionen P_{A1} ... P_{AN}, der Dimensionsdetektionsstandards S₁ ... S_{N} an den verschiedenen Detektionspositionen P₁ ... P_{N} des unbeschichteten Abschnitts der Elektrodenplatte.

7. Detektionsverfahren gemäß Anspruch 6, wobei die Elektrodenplatte mindestens eine Elektrodenplatte mit einer voreingestellten Markierung umfasst; und Schritt S3110 umfasst:
Schritt S3111: Detektieren der mindestens einen Elektrodenplatte mit der voreingestellten Markierung; und
Schritt S3112: Bestimmen, basierend auf den Positionen der verschiedenen Detektionspositionen P₁ ... P_{N} relativ zur voreingestellten Markierung, der absoluten Positionen P_{A1} ... P_{AN} jeder der verschiedenen Detektionspositionen P₁ ... P_{N}.

8. Detektionsverfahren gemäß einem der Ansprüche 1 bis 7, wobei der Dimensionsdetektionsstandard S M1/M2 einer Nenndimension des unbeschichteten Abschnitts in Längsrichtung ist, M1 und M2 positive ganze Zahlen sind und M2 nicht kleiner als M1 ist; und der vorgegebene Schwellwert NM1/M2 ist.

9. Detektionseinrichtung (100) für Elektrodenplatten (10), wobei die Elektrodenplatte (10) einen beschichteten Abschnitt (11) und einen unbeschichteten Abschnitt (12), der auf mindestens einer Seite des beschichteten Abschnitts (11) in Längsrichtung angeordnet ist, umfasst; und die Detektionseinrichtung (100) umfasst:
eine Parametererhalteeinheit (110), die ausgelegt ist zum Erhalten von Dimensionsparametern D₁ ... D_{N} an verschiedenen Detektionspositionen P₁ ... P_{N} des unbeschichteten Abschnitts (12) in einer Querrichtung senkrecht zur Längsrichtung; und
eine Elektrodenplatten-Detektionseinheit (12), die ausgelegt ist zum Vergleichen der Dimensionsparameter D₁ ... D_{N} mit einem Dimensionsdetektionsstandard S, um zu bestimmen, ob der unbeschichtete Abschnitt (12) gefaltet ist,
wobei N eine positive ganze Zahl ist und N größer als oder gleich 2 ist;
wobei die Elektrodenplatten-Detektionseinheit dazu ausgelegt ist zu bestimmen, dass der unbeschichtete Abschnitt gefaltet ist, als Reaktion darauf, dass M aufeinanderfolgende Dimensionsparameter in den Dimensionsparametern D₁ ... D_{N} kleiner als der Dimensionsdetektionsstandard S sind, wobei M eine positive ganze Zahl ist und M größer als oder gleich 1 und kleiner als oder gleich N ist, oder
wobei die Elektrodenplatten-Detektionseinheit ausgelegt ist zum: Bestimmen, dass der unbeschichtete Abschnitt gefaltet ist, als Reaktion darauf, dass eine Menge größer als ein voreingestellter Schwellwert ist, wobei die Menge eine Menge von Dimensionsparametern ist, die kleiner als der Dimensionsdetektionsstandard S in den Dimensionsparametern D₁ ... D_{N} sind; oder
Bestimmen, dass der unbeschichtete Abschnitt nicht gefaltet ist, als Reaktion darauf, dass eine Menge nicht größer als ein voreingestellter Schwellwert ist, wobei die Menge eine Menge von Dimensionsparametern ist, die kleiner als der Dimensionsdetektionsstandard S in den Dimensionsparametern D₁ ... D_{N} sind.

10. Detektionseinrichtung (100) gemäß Anspruch 9, ferner umfassend: eine Standarderhalteeinheit (140), die ausgelegt ist zum Erhalten eines Dimensionsdetektionsstandards S des unbeschichteten Abschnitts (12) der Elektrodenplatte (10),
wobei vorzugsweise die Standarderhalteeinheit (140) ausgelegt ist zum Erhalten von Dimensionsdetektionsstandards S₁ ... S_{N} an den verschiedenen Detektionspositionen P₁ ... P_{N} des unbeschichteten Abschnitts (12) der Elektrodenplatte (10),
wobei noch bevorzugter die Standarderhalteeinheit (140) ferner ein Positionierungsmodul (141) umfasst, das ausgelegt ist zum Bestimmen der absoluten Positionen P_{A1} ... P_{AN} jeder der verschiedenen Detektionspositionen P₁ ... P_{N}; und
die Standarderhalteeinheit (140) ausgelegt ist zum Erhalten, basierend auf den bestimmten absoluten Positionen P_{A1} ... P_{AN}, der Dimensionsdetektionsstandards S₁ ... S_{N} an den verschiedenen Detektionspositionen P₁ ... P_{N} des unbeschichteten Abschnitts (12) der Elektrodenplatte (10),
wobei noch stärker bevorzugt die Elektrodenplatte (10) mindestens eine Elektrodenplatte (10) mit einer voreingestellten Markierung (13) umfasst; und das Positionierungsmodul (141) ferner umfasst:
einen Markierungsdetektionsteil (141A), der ausgelegt ist zum Detektieren der mindestens einen Elektrodenplatte (10) mit einer voreingestellten Markierung (13); und
einen Positionsbestimmungsteil (141B), der ausgelegt ist zum Bestimmen, basierend auf den Positionen der verschiedenen Detektionspositionen P₁ ... P_{N} relativ zur voreingestellten Markierung (13), der absoluten Positionen P_{A1} ... P_{AN} jeder der verschiedenen Detektionspositionen P₁ ... P_{N}.

11. Detektionsvorrichtung für Elektrodenplatten, wobei die Detektionsvorrichtung einen Speicher und einen Prozessor in Kommunikationsverbindung mit dem Speicher umfasst, wobei der Speicher maschinenlesbare Anweisungen speichert und, wenn die maschinenlesbaren Anweisungen durch den Prozessor ausgeführt werden, das Detektionsverfahren gemäß einem der Ansprüche 1 bis 8 implementiert wird.

12. Computerlesbares Speichermedium, wobei das computerlesbare Speichermedium ein Computerprogramm speichert und, wenn das Computerprogramm durch einen Prozessor ausgeführt wird, das Detektionsverfahren gemäß einem der Ansprüche 1 bis 8 implementiert wird.

## Revendications

1. Procédé de détection pour une plaque d'électrodes, dans lequel la plaque d'électrodes comprend une partie revêtue et une partie non revêtue située sur au moins un côté de la partie revêtue dans une direction longitudinale ; et le procédé de détection comprend :
étape S1000 : l'obtention de paramètres dimensionnels D₁... D_{N} à différentes positions de détection P₁... P_{N} de la partie non revêtue dans une direction transversale perpendiculaire à la direction longitudinale ; et
étape S2000 : la comparaison des paramètres dimensionnels D₁... D_{N} à une norme de détection dimensionnelle S pour déterminer si la partie non revêtue est pliée,
dans lequel N est un nombre entier positif, et N est supérieur ou égal à 2 ;
dans lequel l'étape S2000 comprend au moins une de l'étape S2100 et de l'étape S2200 ;
étape S2100 : la détermination que la partie non revêtue est pliée en réponse à M paramètres dimensionnels consécutifs dans les paramètres dimensionnels D₁... D_{N} qui sont inférieurs à la norme de détection dimensionnelle S,
dans lequel M est un nombre entier positif, et M est supérieur ou égal à 1 et inférieur ou égal à N ;
étape S2200 : la détermination que la partie non revêtue est pliée en réponse à une quantité qui est supérieure à un seuil prédéfini, dans lequel la quantité est une quantité de paramètres dimensionnels qui sont inférieurs à la norme de détection dimensionnelle S dans les paramètres dimensionnels D₁... D_{N}, ou
la détermination que la partie non revêtue est non pliée en réponse à une quantité qui n'est pas supérieure à un seuil prédéfini, dans lequel la quantité est une quantité de paramètres dimensionnels qui sont inférieurs à la norme de détection dimensionnelle S dans les paramètres dimensionnels D₁... D_{N}.

2. Procédé de détection selon la revendication 1, dans lequel les paramètres dimensionnels sont des paramètres dimensionnels de la partie non revêtue dans la direction longitudinale.

3. Procédé de détection selon la revendication 2, dans lequel l'étape S1000 comprend :
étape S1100 : l'entraînement de la plaque d'électrodes pour qu'elle se déplace le long de la direction transversale ; et
étape S1200 : l'obtention, pendant le mouvement de la plaque d'électrodes le long de la direction transversale, des paramètres dimensionnels D₁... D_{N} aux différentes positions de détection P₁... P_{N} de la partie non revêtue de la plaque d'électrodes.

4. Procédé de détection selon la revendication 1, dans lequel avant l'étape S2000, le procédé de détection comprend en outre :
étape S3000 : l'obtention d'une norme de détection dimensionnelle S de la partie non revêtue de la plaque d'électrodes.

5. Procédé de détection selon la revendication 4, dans lequel l'étape S3000 comprend :
étape S3100 : l'obtention de normes de détection dimensionnelles S₁... S_{N} aux différentes positions de détection P₁... P_{N} de la partie non revêtue de la plaque d'électrodes.

6. Procédé de détection selon la revendication 5, dans lequel l'étape S3100 comprend :
étape S3110 : la détermination des positions absolues P_{A1}... P_{AN} de chacune des différentes positions de détection P₁... P_{N} ; et
étape S3120 : l'obtention, sur la base des positions absolues déterminées P_{A1}... P_{AN}, des normes de détection dimensionnelles S₁... S_{N} aux différentes positions de détection P₁... P_{N} de la partie non revêtue de la plaque d'électrodes.

7. Procédé de détection selon la revendication 6, dans lequel d'électrodes la plaque d'électrodes comprend au moins une plaque ayant une marque prédéfinie ; et l'étape S3110 comprend :
étape S3111 : la détection de l'au moins une plaque d'électrodes ayant la marque prédéfinie ; et
étape S3112 : la détermination, sur la base des positions des différentes positions de détection P₁... P_{N} par rapport à la marque prédéfinie, des positions absolues P_{A1}... P_{AN}, de chacune des différentes positions de détection P₁... P_{N}.

8. Procédé de détection selon l'une quelconque des revendications 1 à 7, dans lequel la norme de détection dimensionnelle S est M1/M2 d'une dimension nominale de la partie non revêtue dans la direction longitudinale, M1 et M2 sont des nombres entiers positifs et M2 n'est pas inférieur à M1 ; et le seuil prédéfini est NM1/M2.

9. Appareil de détection (100) pour une plaque d'électrodes (10), dans lequel la plaque d'électrodes (10) comprend une partie revêtue (11) et une partie non revêtue (12) située sur au moins un côté de la partie revêtue (11) dans une direction longitudinale ; et l'appareil de détection (100) comprend :
une unité d'obtention de paramètres (110) configurée pour obtenir des paramètres dimensionnels D₁... D_{N} à différentes positions de détection P₁... P_{N} de la partie non revêtue (12) dans une direction transversale perpendiculaire à la direction longitudinale ; et
une unité de détection de plaque d'électrodes (12) configurée pour comparer les paramètres dimensionnels D₁... D_{N} à une norme de détection dimensionnelle S pour déterminer si la partie non revêtue (12) est pliée,
dans lequel N est un nombre entier positif, et N est supérieur ou égal à 2 ;
dans lequel l'unité de détection de plaque d'électrodes est configurée pour déterminer que la partie non revêtue est pliée en réponse à M paramètres dimensionnels consécutifs dans les paramètres dimensionnels D₁... D_{N} qui sont inférieurs à la norme de détection dimensionnelle S, dans lequel M est un nombre entier positif, et M est supérieur ou égal à 1 et inférieur ou égal à N, ou
dans lequel l'unité de détection de plaque d'électrodes est configurée pour : déterminer que la partie non revêtue est pliée en réponse à une quantité qui est supérieure à un seuil prédéfini, dans lequel la quantité est une quantité de paramètres dimensionnels qui sont inférieurs à la norme de détection dimensionnelle S dans les paramètres dimensionnels D₁... D_{N} ; ou déterminer que la partie non revêtue est non pliée en réponse à une quantité qui n'est pas supérieure à un seuil prédéfini, dans lequel la quantité est une quantité de paramètres dimensionnels qui sont inférieurs à la norme de détection dimensionnelle S dans les paramètres dimensionnels D₁... D_{N}.

10. Appareil de détection (100) selon la revendication 9, comprenant en outre : une unité d'obtention de norme (140) configurée pour obtenir une norme de détection dimensionnelle S de la partie non revêtue (12) de la plaque d'électrodes (10),
dans lequel, de préférence, l'unité d'obtention de norme (140) est configurée pour obtenir des normes de détection dimensionnelles S₁... S_{N} aux différentes positions de détection P₁... P_{N} de la partie non revêtue (12) de la plaque d'électrodes (10),
dans lequel de manière davantage préférée,
l'unité d'obtention de norme (140) comprend en outre un module de positionnement (141) configuré pour déterminer des positions absolues P_{A1}... P_{AN} de chacune des différentes positions de détection P₁... P_{N}; et
l'unité d'obtention de norme (140) est configurée pour obtenir, sur la base des positions absolues déterminées P_{A1}... P_{AN}, des normes de détection dimensionnelles S₁... S_{N} aux différentes positions de détection P₁... P_{N} de la partie non revêtue (12) de la plaque d'électrodes (10),
dans lequel de manière encore davantage préférée,
la plaque d'électrodes (10) comprend au moins une plaque d'électrodes (10) ayant une marque prédéfinie (13) ; et le module de positionnement (141) comprend en outre :
une partie de détection de marques (141A) configurée pour détecter l'au moins une plaque d'électrodes (10) ayant la marque prédéfinie (13) ; et
une partie de détermination de positions (141B) configurée pour déterminer, sur la base des positions des différentes positions de détection P₁... P_{N} par rapport à la marque prédéfinie (13), les positions absolues P_{A1}... P_{AN} de chacune des différentes positions de détection P₁... P_{N}.

11. Dispositif de détection pour une plaque d'électrodes, dans lequel le dispositif de détection comprend une mémoire et un processeur en connexion de communication avec la mémoire, dans lequel la mémoire stocke des instructions lisibles par machine, et lorsque les instructions lisibles par machine sont exécutées par le processeur, le procédé de détection est mis en œuvre selon l'une quelconque des revendications 1 à 8.

12. Support de stockage lisible par ordinateur, dans lequel le support de stockage lisible par ordinateur stocke un programme informatique, et lorsque le programme informatique est exécuté par un processeur, le procédé de détection est mis en œuvre selon l'une quelconque des revendications 1 à 8.
